# EUROPÄISCHE PATENTSCHRIFT

(11) **EP 4 025 812 B1**
(45) Veröffentlichungstag und Bekanntmachung des Hinweises auf die Patenterteilung: **27.12.2023**
(21) Anmeldenummer: 21742749.1
(22) Anmeldetag: 30.06.2021
(51) Int. Cl.: F16K 1/226

(54) **METALLISCHE ABDICHTUNG FÜR EIN KLAPPENVENTIL**
METAL SEAL FOR A FLAP VALVE
JOINT MÉTALLIQUE POUR UNE SOUPAPE À CLAPET

(30) Priorität: 30.06.2020 WO PCT/EP2020/068397
(43) Veröffentlichungstag der Anmeldung: 13.07.2022
(73) Patentinhaber: Adams GmbH, 44653 Herne (DE)
(72) Erfinder: ADAMS, Martin, 44797 Bochum (DE); KAPPE, Rudolf August, 45772 Marl (DE); LENO, Eugen, 59439 Holzwickede (DE); KRELL, Julian, 44799 Bochum (DE); SATTELBERGER, Fabian, 48167 Münster (DE)
(74) Vertreter: Schneiders & Behrendt Bochum
(86) Internationale Anmeldenummer: PCT/EP2021/068089
(87) Internationale Veröffentlichungsnummer: WO 2022/003065

(56) Entgegenhaltungen:
- WO-A1-2019/067725
- DE-A1- 19 515 014
- DE-B- 1 096 134
- US-A1- 2017 343 108

## Beschreibung

Die Erfindung betrifft ein Klappenventil, dessen Ventilgehäuse mit einen Durchflusskanal aufweist, in dessen Durchtrittsquerschnitt eine um eine Schwenkachse zwischen einer Öffnungsstellung und einer Absperrstellung verschwenkbare Klappenscheibe angeordnet ist, wobei am äußeren Umfang der Klappenscheibe und am inneren Umfang des Durchflusskanals gegeneinander anpressbare Abdichtelemente angeordnet sind, die mindestens eine ringförmige Metalldichtlippe aufweisen, die in einem additiv Verfahren an metallischer Werkfolie herzustellen ist und in der Absperrstellung unter elastischer Vorspannung an einer gegenüberliegenden, ebenfalls ringförmigen metallischen Gegendichtfläche anliegt, wobei
- entweder die Metalldichtlippe am äußeren Umfang der Klappenscheibe und die Gegendichtfläche am inneren Umfang des Durchflusskanals angeordnet sind
- oder die Gegendichtfläche am äußeren Umfang der Klappenscheibe und die Metalldichtlippe am inneren Umfang des Durchflusskanals angeordnet sind.

Klappenventile mit Metalldichtlippen haben zunächst gegenüber Klappenventilen mit Dichtlippen aus Kunststoff (Polymer) grundsätzlich den Vorteil, dass sie außerordentlich dauerhaft und hitzebeständig sind, d.h. Eigenschaften haben, die mit Dichtlippen aus Kunststoff (Polymer) schlechthin nicht erreichbar sind.

Klappenventile mit derartigen metallischen Abdichtungen sind seit geraumer Zeit bekannt. Hierzu wird beispielsweise auf die WO 2019/067725 verwiesen. Die bei solchen metallischen Abdichtungen verwendeten Metalldichtlippen haben den Vorteil, dass sich die zunächst nur durch die elastische Rückstellkraft definierte Dichtwirkung verstärkt, wenn der Querschnitt der Dichtlippe gegen die Richtung des Druckgefälles gekrümmt oder geneigt verläuft.

Um diesen Verstärkungseffekt in beiden Durchflussrichtungen nutzen zu können, ist es auch bekannt, anstelle von nur einer Metalldichtlippe zwei Metalldichtlippen vorzusehen, die in Durchflussrichtung des Klappenventiles mit Abstand zueinander angeordnet sind. Hierzu wird beispielsweise auf die aus der EP 0 663 549 B1 hervorgehende metallische Abdichtung verwiesen, bei welcher die Querschnittsflächen der beiden Metalldichtlippen in Bezug auf den in der Abdichtstellung zwischen ihnen verbleibenden Hohlraum nach außen geneigt oder abgebogen verlaufen. Diese Ausführungsform der metallischen Abdichtung hat den Vorteil, dass der oben erläuterte Verstärkungseffekt in beiden möglichen Durchströmungsrichtungen erreicht wird, und zwar jeweils an der der Hochdruckseite befindlichen Metalldichtlippe.

Eine noch bessere und insbesondere genauer kontrollierbare Abdichtwirkung ergibt sich, wenn bei der Verwendung von zwei in Durchflussrichtung mit Abstand zueinander angeordneten Metalldichtlippen die Querschnittsflächen der beiden Metalldichtlippen in Richtung auf das Innere des zwischen ihnen befindlichen ringförmigen Hohlraumes geneigt und/oder abgebogen verlaufen (vgl. US 4 396 199 A). Auch in diesem Fall ist in beiden Durchströmungsrichtungen der oben erläuterte Verstärkungseffekt erreichbar, allerdings immer erst an der zweiten, in Durchflussrichtung hinten liegenden Metalldichtlippe, während die erste, in Durchströmungsrichtung vorne liegende Metalldichtlippe bereits bei der durch ihre elastische Vorspannung definierten Abdichtwirkung durchlässig wird. Diese Besonderheit eröffnet eine Vielzahl von Möglichkeiten, die Abdichtwirkung eines solchen mit zwei Metalldichtlippen versehenen Klappenventils zu überwachen und/oder zu beeinflussen, beispielsweise durch Druckbeaufschlagung oder Druckentlastung des zwischen den beiden Metalldichtlippen befindlichen Hohlraumes - oder im Notfall - durch Befüllen dieses Hohlraumes mit einem abbindenden Absperrmedium. Wegen der schwierigen Abstimmung der Dichtwirkung der beiden aufeinanderfolgenden Metalldichtlippen hat sich diese besondere Form der metallischen Dichtung in der Praxis bisher allerdings nicht durchsetzen können.

Ein bei metallischen Abdichtungen der eingangs genannten Art immer wieder auftretendes Problem besteht darin, dass die Abdichtverhältnisse und mechanischen Belastungen über den Umfang der Klappenscheibe bzw. den Umfang des Ventilgehäuses sehr unterschiedlich sind, und zwar insbesondere in Bezug auf den Abstand, den der jeweilige Umfangsbereich von der Schwenkachse des Klappenventils hat. Ursächlich dafür sind zunächst die in Abhängigkeit von der Distanz zur Schwenkachse unterschiedlichen Relativbewegungen zwischen der Metalldichtlippe einerseits und der mit dieser zusammenwirkenden Gegendichtfläche andererseits. Großen Einfluss auf diese Bewegungswege hat insbesondere die Position der Schwenkachse relativ zur Klappenscheibe. Hier unterscheidet man unterschiedliche Bauweisen, beispielsweise
- die zentrische Bauweise, bei der die Schwenkachse der Klappenscheibe durch den Mittelpunkt einer kreisringförmigen Dichtungsanordnung verläuft,
- die einfach-exzentrische Bauweise, bei der die Schwenkachse der Klappenscheibe in Durchflussrichtung entlang der Achse des Durchflusskanals axial verschoben ist,
- die zweifach-exzentrische Bauweise, bei der zusätzlich zu der einfachexzentrischen Bauweise die Schwenkachse der Klappenscheibe senkrecht zur Achse des Durchflusskanals verschoben ist,
- die dreifach-exzentrische Bauweise, bei der zusätzlich zu der zweifachexzentrischen Bauweise die Ebene der Dichtungsanordnung nicht mehr senkrecht zur Achse des Durchflusskanals angeordnet ist,
- die vierfach-exzentrische Bauweise, bei der zusätzlich zu der dreifachexzentrischen Bauweise die Dichtungsanordnung nicht kreisrund sondern oval ausgebildet ist,
- und die fünffach-exzentrische Bauweise, bei der zusätzlich zur vierfachexzentrischen Bauweise die Ebene des Dichtungskegels außerhalb der Achse des Durchflusskanals angeordnet ist.

Die vorliegende Erfindung bezieht sich auf Klappenventilen aller bekannten Bauweisen.

Eine exakt kreisringförmige Form hat die Dichtungsanordnung praktisch nur bei der zentrischen Bauweise. Bei allen exzentrischen Bauweisen weicht die Form der Dichtungsanordnung demgegenüber mehr oder weniger von der Kreisreform ab, was zu komplizierten Relativbewegungen zwischen den Metalldichtlippe einerseits und der Gegendichtfläche andererseits führt.

Von großer Bedeutung für die Ausgestaltung der metallischen Dichtung sind insbesondere die für das Schließen und Öffnen der Klappenscheibe erforderlichen Schwenkmomente, vor allem die beim Öffnen des Klappenventils erforderlichen Losbrechmomente. Diese Schließmomente und Losbrechmomente sind natürlich davon abhängig, welche Gleit- oder Haftreibungskräfte in welchem Abstand von der Schwenkachse beim Öffnen und Schließen der Klappenscheibe überwunden werden müssen.

Weitere schwierige Probleme entstehen häufig auch daraus, dass in denjenigen Umfangsbereichen der Metalldichtlippen, in denen der Öffnungsvorgang beginnt, durch den sogenannten Bernoulli-Effekt heftige Resonanzschwingungen erzeugt werden, die verhältnismäßig schnell zu Schäden an den entsprechenden Umfangsbereichen der Metalldichtlippen und der Gegendichtfläche führen. Diesen Erscheinungen versucht man dadurch entgegenzuwirken, dass die Massenverteilung und die elastischen Rückstellkräfte in den Metalldichtlippen so aufeinander abgestimmt werden, dass solche Schwingungen so gut wie möglich unterbunden werden.

Die oben aufgeführten Probleme lassen sich bei den bekannten metallischen Dichtungen kaum lösen, weil die Metalldichtlippen aus fertigungstechnischen Gründen in der Regel über den gesamten Umfang aus dem gleichen Material bestehen und dementsprechend ringsum die gleichen physikalischen Eigenschaften haben. Aufgrund der oben diskutierten Besonderheiten ergeben sich deshalb bei der Fertigung von Metalldichtlippen für metallischen Abdichtungen der eingangs genannten Art praktisch unlösbare Zielkonflikte, was zur Folge hat, dass solche metallischen Abdichtsysteme generell nur begrenzt einsetzbar sind.

Es ist deshalb Aufgabe der Erfindung, die metallische Abdichtung der eingangs genannten Art im Hinblick auf ihre physikalischen Eigenschaften dahingehend weiterzubilden, dass die Abdichtwirkung verbessert wird, die Betätigung der Klappenscheibe beim Öffnen und Schließen des Klappenventils erleichtert wird und durch Resonanzschwingungen verursachte Schäden weitestgehend vermieden werden.

Unter physikalischen Eigenschaften werden im Kontext dieser Beschreibung in erster Linie die mechanischen Eigenschaften verstanden, d.h. Eigenschaften, die im Zusammenhang mit äußeren Krafteinwirkungen stehen (Festigkeit, Steifigkeit, Streckgrenze, Dämpfungsgrad etc.). Je nach Einsatzfall sind bisweilen aber auch andere physikalische Werkstoffeigenschaften wichtig, z.B. thermische Leitfähigkeit, thermische Ausdehnungskoeffizient, Permeabilität etc.

Zur Lösung der gestellten Aufgabe schlägt die Erfindung ausgehend von einer metallischen Dichtung der eingangs genannten Art vor, dass die Metalldichtlippe in einem additiven Verfahren aus metallischen Werkstoffen mit an die unterschiedlichen Umfangsbereiche der Metalldichtlippe angepasster Form, Querschnittsgeometrie und/oder Legierung hergestellt ist.

Durch die Herstellung der Metalldichtlippe in einem additiven Verfahren ist es erstmals möglich, den verschiedenen Umfangsbereichen der Metalldichtlippe Eigenschaften zu geben, die an die unterschiedlichen Erfordernisse im Hinblick auf die Dichtwirkung, die Haft- und Gleitreibung, die Relativbewegung zwischen Metalldichtlippe und Gegendichtfläche und das Schwingungsverhalten optimal angepasst sind.

Vorzugsweise weist die Metalldichtlippe Umfangsabschnitte auf, deren Biegesteifigkeit in Abhängigkeit von der Distanz dieser Umfangsabschnitte in Bezug auf die Schwenkachse der Klappenscheibe unterschiedlich ist. Es hat sich nämlich herausgestellt, dass die Distanz zwischen der Schwenkachse der Klappenscheibe und dem jeweiligen Umfangsbereich der Metalldichtlippe das wesentliche Kriterium für deren angepasste Gestaltung ist, vor allem weil diese Distanz ganz wesentlichen Einfluss auf die Relativbewegung zwischen der Metalldichtlippe einerseits und der dieser zugewandten gegen Dichtfläche andererseits hat.

In diesem Zusammenhang ist beispielsweise vorgesehen, dass die mit größter Distanz zur Schwenkachse der Klappenscheibe angeordneten Umfangsabschnitte der Metalldichtlippe eine größere Biegesteifigkeit haben als die mit kleinster Distanz zu dieser Schwenkachse angeordneten Umfangsabschnitte der Metalldichtlippe.

Um diese besondere Verteilung der Biegesteifigkeiten der Metalldichtlippe zu erreichen, schlägt die Erfindung vor, dass die Querschnittsflächen der Umfangsabschnitte mit größter Distanz zur Schwenkachse der Klappenscheibe größere Flächenträgheitsmomente haben als die Querschnittsflächen der Umfangsabschnitte mit kleinster Distanz zur Schwenkachse der Klappenscheibe.

Diese Anpassung der Flächenträgheitsmomente der Querschnitte der Metalldichtlippen in den verschiedenen Umfangsabschnitten hat nicht nur Einfluss auf die Biegesteifigkeit in den betreffenden Umfangsabschnitten, sondern zusätzlich auch Einfluss auf die Masseverteilung, wodurch wiederum das Schwingungsverhalten beeinflussbar ist. Nach der Lehre der Erfindung kann man alle diese physikalischen Eigenschaften so aufeinander abstimmen, dass die durch den Bernoulli-Effekt verursachten schädlichen Resonanzschwingungen weitestgehend unterbunden werden, und zwar dadurch, dass die mit der größten Distanz zur Schwenkachse der Klappenscheibe angeordneten Umfangsabschnitte der Metalldichtlippe einen höheren Dämpfungsgrad haben als die Umfangsabschnitte der Metalldichtlippe mit der kleinsten Distanz zu dieser Schwenkachse.

Die erwünschten Unterschiede in der Biegesteifigkeit können auch dadurch hergestellt und beeinflusst werden, dass unterschiedliche Herstellungsmaterialien in den fraglichen Umfangsbereichen der Metalldichtlippe eingesetzt werden, was bei einer additiven Fertigung ohne weiteres möglich ist. In diesem Zusammenhang schlägt die Erfindung vor, dass die Umfangsabschnitte mit größter Distanz zur Schwenkachse der Klappenscheibe aus einer metallischen Legierung bestehen, deren Steifigkeit größer ist als die Steifigkeit der metallischen Legierung, aus welcher die Umfangsabschnitte mit kleinster Distanz zur Schwenkachse der Klappenscheibe hergestellt sind. In diesem Zusammenhang können für die Herstellung der Metalldichtlippe z. B. geeignete rostfreie Eisenlegierungen (Fe-, Ni- und Co- basierte Legierungen) mit ausreichend hoher Streckgrenze und hohem Verfestigungsexponenten eingesetzt werden. Bei der additiven Fertigung können im Volumen der Metalldichtlippen auch geeignete Materialgradienten hergestellt werden, und zwar sowohl in Querschnittsrichtung als auch in Umfangsrichtung. Schließlich ist es bei der additiven Fertigung auch möglich, während der Fertigung eine intrinsische Wärmebehandlung in bestimmten Volumenbereichen vorzunehmen, um innerhalb des Volumens der Metalldichtlippe unterschiedliche Eigenschaften herzustellen.

Wichtig ist schließlich noch, dass nach der Lehre der Erfindung die unterschiedlich ausgebildeten Umfangsabschnitte der Metalldichtlippe in Umfangsrichtung der Metalldichtlippe graduell ineinander übergehen. Hierdurch wird erreicht, dass trotz der unterschiedlichen Ausgestaltung der verschiedenen Umfangsbereiche ringsum für eine gleichmäßige Anlage der Metalldichtlippe an der Gegendichtfläche gesorgt werden kann.

Um die Abdichtwirkung zu verbessern, kann schließlich noch vorgesehen sein, dass die mit der Gegendichtfläche in Berührung kommenden Oberflächenbereiche der Metalldichtlippe mit einer weichdichtenden Metallschicht überzogen sind. Hier kommen beispielsweise Beschichtungen aus Silber oder aus Nickel infrage.

Eine besonders bevorzugte Ausführungsform der Erfindung sieht vor, dass der Metalldichtlippe eine zweite Metalldichtlippe zugeordnet ist, die in Durchströmungsrichtung des Klappenventils einen Abstand zu der ersten Metalldichtlippe hat, dass die beiden Metalldichtlippen in der Absperrstellung des Klappenventils bei Anlage an der Gegendichtfläche gemeinsam einen ringförmigen Hohlraum umschließen, und dass die Querschnittsflächen der beiden Metalldichtlippen in Richtung auf das Innere dieses ringförmigen Hohlraumes geneigt und/oder abgebogen verlaufen, wobei die beiden Metalldichtlippen in einem additiven Verfahren aus metallischen Werkstoffen und mit den örtlichen Erfordernissen angepasster Form Elastizität und Härte herestellt sind und über den

Umfang verteilt unterschiedliche physikalische Eigenschaften aufweisen. Durch die Verwendung von Metalldichtlippen der vorstehend erläuterten Art, d.h. von Metalldichtlippen, die in einem additiven Verfahren hergestellt sind, ist es erstmals möglich, die ganz besonderen Anforderungen an die beiden zusammenwirkenden Metalldichtlippen über den gesamten Umfang exakt aufeinander abzustimmen, wodurch dieses im Prinzip vorteilhafte metallische Abdichtungssystem in der Praxis erstmals vielseitig einsatzfähig gemacht worden ist.

Ein Ausführungsbeispiel der Erfindung wird nachfolgend anhand der Zeichnung näher erläutert. Es zeigen:

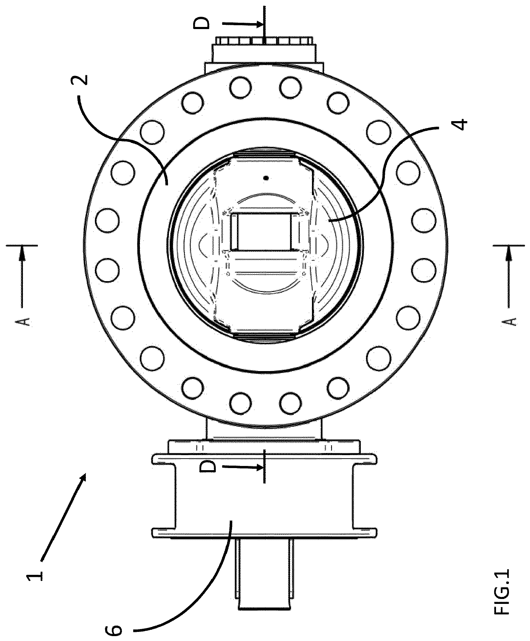

- Figur 1.: schematisch die Ansicht eines Klappenventils in Durchflussrichtung gesehen;
- Figur 2:: einen Schnitt entlang der Linie A-A in Figur 1;
- Figur 3:: vergrößert die Details B und C aus Figur 2, d.h. die metallische Abdichtung gemäß der Erfindung in den Umfangsbereichen mit der größten Distanz zur Schwenkachse ;
- Figur 4:: einen Schnitt entlang der Linie D-D in Figur 1;
- Figur 5:: vergrößert die Details D und E aus Figur 4, d.h. die metallische Abdichtung gemäß der Erfindung in den Umfangsbereichen mit der kleinsten Distanz zur Schwenkachse;
- Figuren 6, 7,8 und 9:: verschiedene mögliche Querschnitte der Metalldichtlippe in unterschiedlichen Umfangsbereichen der metallischen Abdichtung;
- Figur 10:: den Querschnitt durch eine Metalldichtlippe für eine metallische Abdichtung mit nur einer einzigen Metalldichtlippe.

In der Zeichnung ist das Klappenventil in seiner Gesamtheit mit dem Bezugszeichen 1 bezeichnet. Das Klappenventil 1, welches zum Beispiel in eine Rohrleitung eingebaut werden kann, weist ein Ventilgehäuses 2 auf, welches mit einem kreisrunden Durchflusskanal 3 versehen ist, in dessen Durchflussquerschnitt eine Klappenscheibe 4 angeordnet ist, die in dem Durchflusskanal 3 um eine Schwenkachse 5 drehbar ist. Zum Bewegen der Klappenscheibe 4 um die Schwenkachse 5 dient ein außen an dem Ventilgehäuses 2 befestigter Schwenkantrieb 6. In der Zeichnung befindet sich die Klappenscheibe 4 in der Absperrstellung, in welcher sie den Durchflusskanal 3 des Ventilgehäuses 2 komplett absperrt.

Am inneren Umfang des Durchflusskanales 3 sind zwei ringförmige Metalldichtlippen 7a und 7b befestigt, die in Durchflussrichtung des Durchflusskanales 3 in einem engen Abstand zueinander angeordnet sind und zwischen sich einen ringförmigen Hohlraum 8 belassen. Dabei verlaufen die Querschnitte der beiden Metalldichtlippen 7a und 7b in Richtung auf das Innere dieses Hohlraumes 8 geneigt bzw. gebogen.

Die Klappenscheibe 4 des Klappenventils 1 ist an ihrem äußeren Umfang mit einer ringförmigen Gegendichtfläche 9 versehen, die in der dargestellten Sperrstellung der Klappenscheibe 4 an den ringförmigen Metalldichtlippen 7a und 7b anliegt. Dabei stehen die beiden Metalldichtlippen 7a und 7b in der dargestellten Sperrstellung unter elastischer Vorspannung und bilden somit gemeinsam mit der Gegendichtfläche 9 der Klappenscheibe 4 eine sichere metallische Abdichtung.

Abweichend vom dargestellten Ausführungsbeispiel können - umgekehrt - die Metalldichtlippen auch am äußeren Umfang der Klappenscheibe 4 und die Gegendichtfläche am inneren Umfang des Durchflusskanals 3 des Ventilgehäuses 2 angeordnet sein. Weiterhin kann anstelle von zwei Metalldichtlippen 7a und 7b auch nur eine einzige Metalldichtlippe vorgesehen sein. Wie eingangs erläutert, wirkt eine solche metallische Abdichtung mit nur einer Metalldichtlippe dann allerdings nur in einer Durchflussrichtung selbstverstärkend.

Nach der Lehre der Erfindung sind die Metalldichtlippen 7a und 7b in einem additiven Verfahren aus metallischen Werkstoffen mit den örtlichen Erfordernissen angepasster Form, Elastizität und Härte hergestellt und weisen über ihren Umfang verteilt verschiedene Biegesteifigkeiten auf.

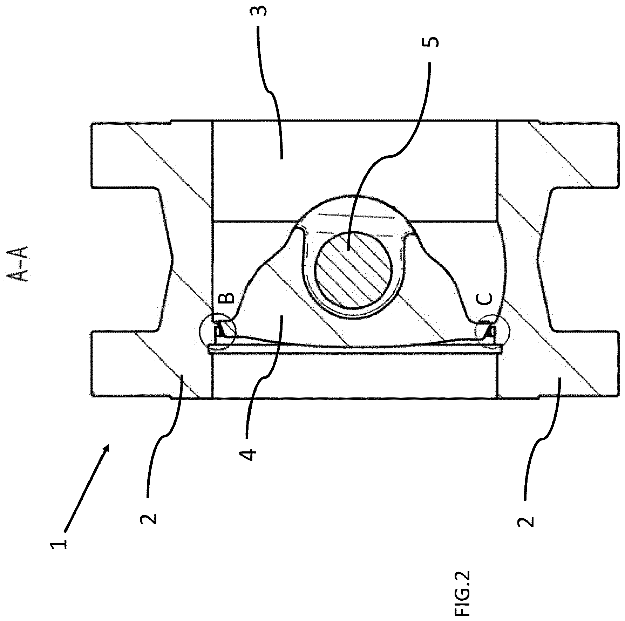

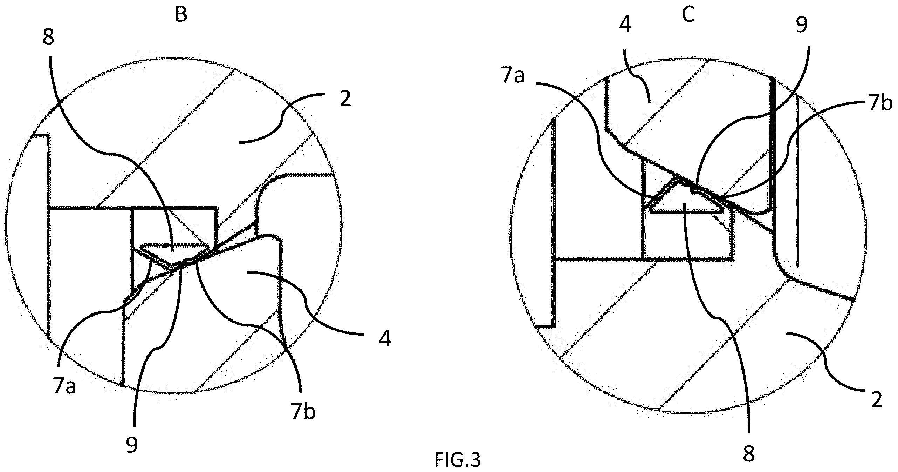

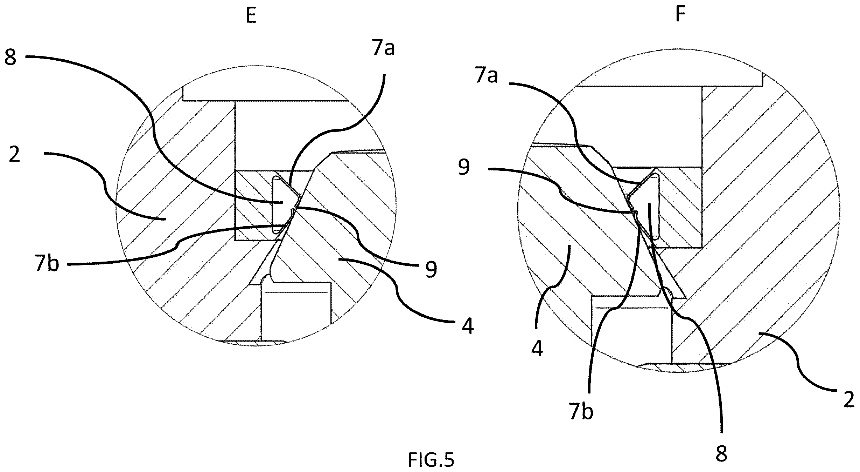

Diese Besonderheit soll nachfolgend anhand eines Vergleiches der Figuren 3 und 5 erläutert werden. Die Figur 3 zeigt vergrößert Querschnitte durch die Metalldichtlippen 7a und 7b in den Umfangsbereichen mit der größten Distanz von der Schwenkachse 5, d. h. die Details B und C aus Figur 2. Ein Vergleich dieser Details B und C zeigt, dass die Metalldichtlippen 7a und 7b sich in diesen beiden Umfangsbereichen sowohl in der geometrischen Form als auch in der Querschnittsfläche deutlich voneinander unterscheiden. Die Unterschiede in der geometrischen Form dienen zunächst zur besseren Anpassung an die beim Öffnungs- und Schließvorgang auftretenden unterschiedlichen Relativbewegungen zwischen den Metalldichtlippen 7a und 7b einerseits und der Gegendichtfläche 9 andererseits. Die unterschiedlichen Querschnittsflächen der Metalldichtlippen 7a und 7b passen deren Biegesteifigkeit und Masse den besonderen Anforderungen in diesen Umfangsbereichen an. Die richtig angepasste Elastizität und Massenverteilung in diesen Umfangsbereichen ist hier von großer Bedeutung, wenn den beim Öffnungs- und Schließvorgang in diesen Umfangsbereichen besonders intensiv auftretenden, durch den Bernoulli-Effekt verursachten Resonanzschwingungen entgegengewirkt werden soll.

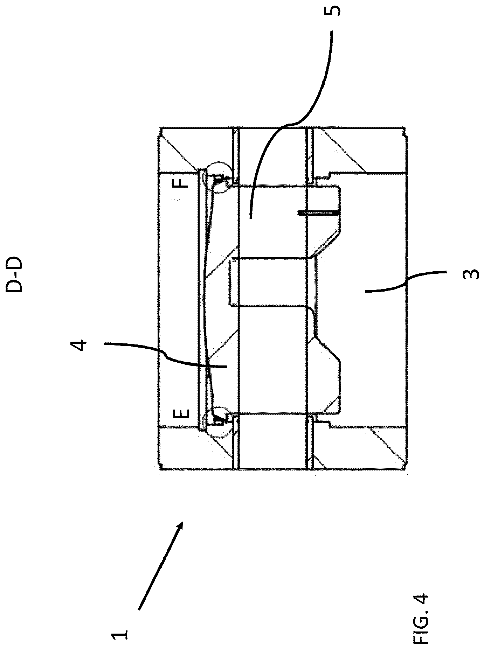

Viel einfacher sind demgegenüber die Abdichtverhältnisse in den Umfangsbereichen mit der kleinsten Distanz zur Schwenkachse 5, wie in den Figuren 4 und 5 anhand der Details E und F veranschaulicht ist. In diesen Umfangsbereichen können die Metalldichtlippen 7a und 7b in Form und Querschnitt einander gleich und vorteilhaft dünn ausgeführt werden, weil die Relativbewegungen gegenüber der Gegendichtfläche 9 dies zulassen und Resonanzschwingungen weniger zu befürchten sind. Ein weiterer Vorteil besteht darin, dass wegen der geringeren Reibung zwischen Metalldichtlippen 7a und 7b und Gegendichtfläche 9 kleinere Schließ- und Losbrechmomente benötigt werden.

Für die Funktionsfähigkeit der neuen metallischen Dichtung ist schließlich noch wichtig, dass die unterschiedlich ausgebildeten Umfangsabschnitte (vergleiche die oben erläuterten Details B und C einerseits und E und F andererseits) in Umfangsrichtung kontinuierlich ineinander übergehen, was bei einer additiven Fertigung problemlos möglich ist. Nur durch einen solchen graduellen Übergang kann sichergestellt werden, dass die Metalldichtlippen 7a und 7b sich ringsum gleichmäßig an der Gegendichtfläche 9 anlegen.

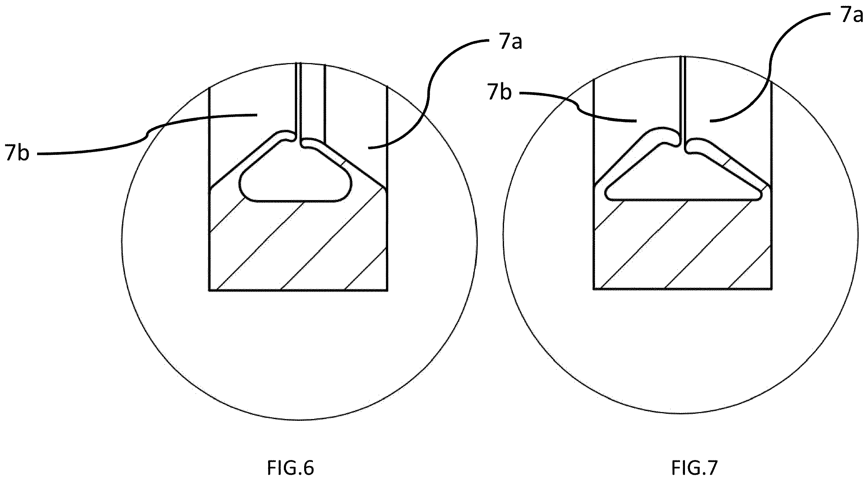

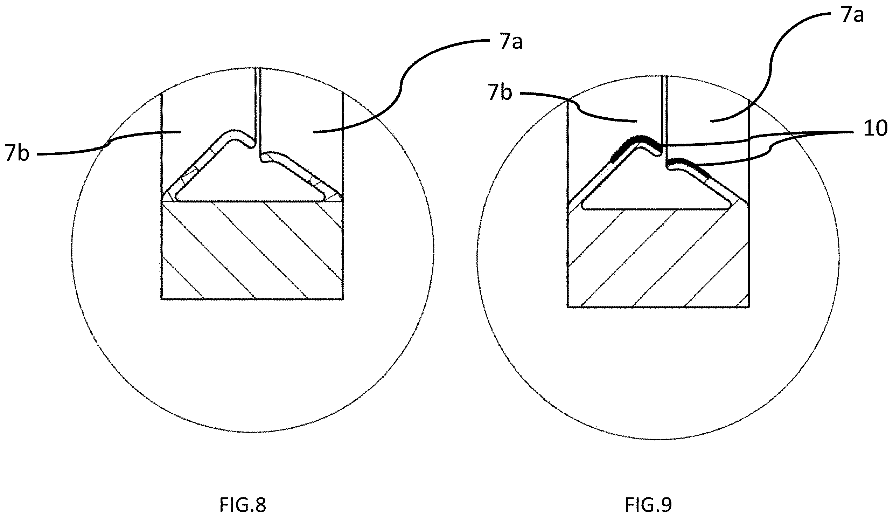

Die Figuren 6,7 und 8 zeigen verschiedene Ausführungsbeispiele für mögliche Querschnittsformen von im additiven Herstellungsverfahren hergestellten Metalldichtlippen 7a und 7b, die in den unterschiedlichen Umfangsbereichen zum Einsatz kommen können. Die Figur 9 zeigt Metalldichtlippen 7a und 7b im Querschnitt, bei denen die mit der Gegendichtfläche 9 in Berührung kommenden Oberflächenbereiche mit einer weichdichtenden Metallschicht 10 überzogen sind.

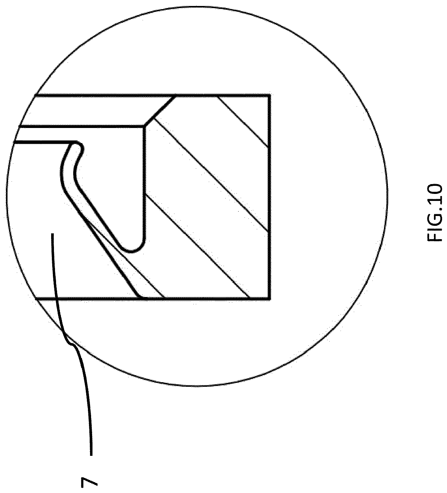

Die Figur 10 zeigt schließlich die Querschnittsgestalt einer einzeln zu verwendenden Metalldichtlippe 7 für eine metallische Ablichtung, die mit nur einer einzigen Metalldichtlippe ausgestattet ist.

## Patentansprüche

1. Klappenventil (1), dessen Ventilgehäuse (2) einen Durchflusskanal (3) aufweist, in dessen Durchtrittsquerschnitt eine um eine Schwenkachse (5) zwischen einer Öffnungsstellung und einer Absperrstellung verschwenkbare Klappenscheibe (4) angeordnet ist, wobei am äußeren Umfang der Klappenscheibe (4) und am inneren Umfang des Durchflusskanals (3) gegeneinander anpressbare Abdichtelemente (7, 7a, 7b, 9) angeordnet sind, die mindestens eine ringförmige Metalldichtlippe (7, 7a, 7b) aufweisen, die in einem additiven Verfahren aus metallischen Werkstoffen hergestellt ist und in der Absperrstellung unter elastische Vorspannung an einer gegenüberliegenden, ebenfalls ringförmigen metallischen Gegendichtfläche (9) anliegt, wobei
- entweder die Metalldichtlippe (7, 7a, 7b) am äußeren Umfang der Klappenscheibe (4) und die Gegendichtfläche (9) am inneren Umfang des Durchflusskanals (3) angeordnet sind
- oder die Gegendichtfläche (9) am äußeren Umfang der Klappenscheibe (4) und die Metalldichtlippe (7, 7a, 7b) am inneren Umfang des Durchflusskanals (3) angeordnet sind,
**dadurch gekennzeichnet,**
**dass** die Metalldichtlippe (7, 7a, 7b) Umfangsabschnitte aufweist, deren Biegesteifigkeit durch Form, Querschnittsgeometrie und/oder Legierung des für die Herstellung verwendeten metallischen Herstellungsmaterials
, in Abhängigkeit von der Distanz dieser Umfangsabschnitte in Bezug auf die Schwenkachse (5) der Klappenscheibe (4) unterschiedlich ist.

2. Klappenventil (1) nach Patentanspruch 1,
**dadurch gekennzeichnet,**
**dass** die mit der größten Distanz zur Schwenkachse (5) der Klappenscheibe (4) angeordneten Umfangsabschnitte der Metalldichtlippe (7, 7a, 7b) eine größere Biegesteifigkeit haben als die mit kleinster Distanz zu dieser Schwenkachse (5) angeordneten Umfangsabschnitte der Metalldichtlippe (7, 7a, 7b).

3. Klappenventil (1) nach Patentanspruch 2 ,
**dadurch gekennzeichnet,**
**dass** die Querschnittsflächen der Metalldichtlippe (7, 7a, 7b) in den Umfangsabschnitten mit größter Distanz zur Schwenkachse (5) der Klappenscheibe (4) größere Flächenträgheitsmomente haben als die Querschnittsflächen der Metalldichtlippe (7, 7a, 7b) in Umfangsabschnitten mit kleinster Distanz zur Schwenkachse (5) der Klappenscheibe (4).

4. Klappenventil (1) nach einem der Patentansprüche 1-3,
**dadurch gekennzeichnet,**
**dass** die Umfangsabschnitte der Metalldichtlippe (7,7 a, 7b) mit größter Distanz zur Schwenkachse (5) der Klappenscheibe (4) einen höheren Dämpfungsgrad haben als Umfangsabschnitte mit kleinster Distanz zur Schwenkachse (5) der Klappenscheibe (4).

5. Klappenventil (1)nach einem der Patentansprüche 1-4,
**dadurch gekennzeichnet,**
**dass** die Umfangsabschnitte der Metalldichtlippe (7, 7a, 7b) mit größter Distanz zur Schwenkachse (5) der Klappenscheibe (4) aus einer metallischen Legierung bestehen, deren Steifigkeit größer ist als die Steifigkeit der metallischen Legierung, aus welcher die Umfangsabschnitte der Metalldichtlippe (7, 7a, 7b) mit kleinster Distanz zur Schwenkachse (5) der Klappenscheibe (4) bestehen.

6. Klappenventil (1) nach einem der Patentansprüche 1-5,
**dadurch gekennzeichnet,**
**dass** die unterschiedlich ausgebildeten Umfangsabschnitte der Metalldichtlippe (7, 7a, 7b) in Umfangsrichtung der Metalldichtlippe (7, 7a, 7b) graduell ineinander übergehen.

7. Klappenventil (1) nach einem der Patentansprüche 1-6,
**dadurch gekennzeichnet,**
**dass** die mit der Gegendichtfläche (9) in Berührung kommenden Oberflächenbereiche der Metalldichtlippe (7, 7a, 7b) mit einer weichdichtenden Metallschicht (10) überzogen sind.

8. Klappenventil (1) nach einem der Patentansprüche 1-7,
**dadurch gekennzeichnet,**
**dass** der Metalldichtlippe (7a) eine zweite Metalldichtlippe (7b) zugeordnet ist, die in Durchströmungsrichtung des Klappenventiles (1) einen Abstand zu der ersten Metalldichtlippe (7 a) hat, dass die beiden Metalldichtlippen (7a, 7b) in der Absperrstellung des Klappenventils (1) bei Anlage an der Gegendichtfläche (9) gemeinsam einen ringförmigen Hohlraum (8) umschließen, und dass die Querschnittsflächen der beiden Metalldichtlippen (7a, 7b) in Richtung auf das Innere dieses ringförmigen Hohlraumes (8) geneigt und/oder abgebogen verlaufen.

## Claims

1. Flap valve (1), which has a valve housing (2) with a flow channel (3), in the flow cross-section of which a valve disc (4) is disposed such that it can swivelled around a swivel axis (5) between an open position and a shutoff position, wherein sealing elements (7,7a,7b,9), which can be pressed against one another, are disposed on the outer circumference of the valve disc (4) and on the inner circumference of the flow channel (3), and they have at least one annular metal sealing lip(7,7a,7b), which is produced in an additive method from metal material and bears in the shutoff position with elastic preload on an oppositely situated, likewise annular metal mating sealing face (9), wherein
- eather the metal sealing lip (7,7a,7b) is in disposed on the outer circumference of the valve disc (4) and the mating sealing face (9) is disposed on the inner circumference of the flow channel (3)
- or the mating sealing face (9) is disposed on the outer circumference of the valve disc (4) and the metal sealing lip(7,7a,7b) is disposed on the inner circumference of the flow channel (3)
**characterised in,**
**that** the metal sealing lip (7,7a,7b) has circumferential portions whose flexual strength is different by shape, cross-sectional geometry and or alloy of the used metallic manufacturing material as a function of the distance of these circumferential portions relative to swivel axis (5) the valve disc (4).

2. Flap valve (1)according to claim 1,
**characterized in that**
the circumferential portions of the metal sealing lip (7, 7a, 7b) disposed with largest distance to the swivel axis (5) of the valve disk (4) have a higher flexural strength than the circumferential portions of the metal sealing lip (7, 7a, 7b) disposed with smallest distance to this swivel axis (5).

3. Flap valve (1) according to claim 2,
**characterized in that**
the cross-sectional areas of the metal sealing lip (7, 7a, 7b) in the circumferential portions with largest distance to the swivel axis (5) of the valve disk (4) have higher area moments of inertia than the cross-sectional areas of the metal sealing lip (7, 7a, 7b) in circumferential portions with smallest distance to the swivel axis (5) of the valve disk (4).

4. Flap valve (1) according to one of claims 1-3,
**characterized in that**
the circumferential portions of the metal sealing lip (7, 7a, 7b) largest distance to the swivel axis (5) of the valve disk (4) have a higher degree of damping than circumferential portions with smallest distance to the swivel axis (5) of the valve disk (4).

5. Flap valve (1) according to one of claims 1-4,
**characterized in that**
the circumferential portions of the metal sealing lip (7, 7a, 7b) with largest distance to the swivel axis (5) of the valve disk (4) consist of a metal alloy having stiffness greater than the stiffness of the metal alloy of which the circumferential portions of the metal sealing lip (7, 7a, 7b) consists that have the smallest distance to the swivel axis (5) of the valve disk (4).

6. Flap valve (1) according to one of claims 1-5,
**characterized in that**
the differently formed circumferential portions of the metal sealing lip (7, 7a, 7b) transition gradually into one another in circumferential direction of the metal sealing lip (7, 7a, 7b).

7. Flap valve (1) according to one of claims 1-6,
**characterized in that**
the surface regions of the metal sealing lip (7, 7a, 7b) coming into contact with the mating sealing face (9) are coated with a soft-sealing metal layer (10).

8. Flap valve (1) according to one of claims 1-7,
**characterized in that**
a second metal sealing lip (7b) is associated with the metal sealing lip (7a) and, in the flow direction of the flap valve (1), has a distance to the first metal sealing lip (7a) such that the two metal sealing lips (7a, 7b) together enclose an annular hollow space (8) in the shutoff position of the flap valve (1) while bearing on the mating sealing face (9), and such that the cross-sectional areas of the two metal sealing lips (7a, 7b) extend in inclined and/or bent-off manner in the direction of the interior of this annular hollow space (8).

## Revendications

1. Soupape à clapet (1), dont le boîtier de soupape (2) présente un canal de passage (3), dans la section de passage duquel est disposé un disque de clapet (4) pivotant autour d'un axe de pivotement (5) entre une position d'ouverture et une position de blocage, dans laquelle des éléments d'étanchéité (7, 7a, 7b, 9) pouvant être pressés l'un contre l'autre sont disposés sur la circonférence extérieure du disque de clapet (4) et sur la circonférence intérieure du canal de passage (3), lesdits éléments d'étanchéité présentant au moins une lèvre d'étanchéité métallique (7, 7a, 7b) annulaire qui est fabriquée à partir de matériaux métalliques dans un procédé de fabrication additive et qui, dans la position de blocage, s'applique sous précontrainte élastique sur une contre-surface d'étanchéité (9) métallique opposée et également annulaire, dans laquelle
- soit la lèvre d'étanchéité métallique (7, 7a, 7b) est disposée sur la circonférence extérieure du disque de clapet (4) et la contre-surface d'étanchéité (9) sur la circonférence intérieure du canal de passage (3)
- soit la contre-surface d'étanchéité (9) est disposée sur la circonférence extérieure du disque de clapet (4) et la surface d'étanchéité métallique (7, 7a, 7b) sur la circonférence intérieure du canal de passage (3),
**caractérisée en ce que**
la lèvre d'étanchéité métallique (7, 7a, 7b) présente des parties circonférentielles dont la rigidité à la flexion est différente, par la forme, la géométrie de section transversale et/ou l'alliage du matériau de fabrication métallique utilisé pour la fabrication, en fonction de la distance entre lesdites parties circonférentielles et l'axe de pivotement (5) du disque de clapet (4).

2. Soupape à clapet (1) selon la revendication 1,
**caractérisée en ce que**
les parties circonférentielles de la lèvre d'étanchéité métallique (7, 7a, 7b) disposées à la plus grande distance de l'axe de pivotement (5) du disque de clapet (4) possèdent une rigidité à la flexion supérieure par rapport aux parties circonférentielles de la lèvre d'étanchéité métallique (7, 7a, 7b) disposées à la plus petite distance dudit axe de pivotement (5).

3. Soupape à clapet (1) selon la revendication 2,
**caractérisée en ce que**
les surfaces de section transversale de la lèvre d'étanchéité métallique (7, 7a, 7b) dans les parties circonférentielles situées à la plus grande distance de l'axe de pivotement (5) du disque de clapet (4) possèdent des moments d'inertie de surface supérieurs par rapport aux surfaces de section transversale de la lèvre d'étanchéité métallique (7, 7a, 7b) dans des parties circonférentielles situées à la plus petite distance de l'axe de pivotement (5) du disque de clapet (4).

4. Soupape à clapet (1) selon l'une des revendications 1 à 3,
**caractérisée en ce que**
les parties circonférentielles de la lèvre d'étanchéité métallique (7, 7a, 7b) situées à la plus grande distance de l'axe de pivotement (5) du disque de clapet (4) possèdent un degré d'amortissement supérieur par rapport à des parties circonférentielles situées à la plus petite distance de l'axe de pivotement (5) du disque de clapet (4).

5. Soupape à clapet (1) selon l'une des revendications 1 à 4,
**caractérisée en ce que**
les parties circonférentielles de la lèvre d'étanchéité métallique (7, 7a, 7b) situées à la plus grande distance de l'axe de pivotement (5) du disque de clapet (4) sont constituées d'un alliage métallique dont la rigidité est supérieure à la rigidité de l'alliage métallique dont sont constituées les parties circonférentielles de la lèvre d'étanchéité métallique (7, 7a, 7b) situées à la plus petite distance de l'axe de pivotement (5) du disque de clapet (4).

6. Soupape à clapet (1) selon l'une des revendications 1 à 5,
**caractérisée en ce que**
les parties circonférentielles réalisées différemment de la lèvre d'étanchéité métallique (7, 7a, 7b) se fondent progressivement les unes dans les autres dans la direction circonférentielle de la lèvre d'étanchéité métallique (7, 7a, 7b).

7. Soupape à clapet (1) selon l'une des revendications 1 à 6,
**caractérisée en ce que**
les zones de surface de la lèvre d'étanchéité métallique (7, 7a, 7b) venant en contact avec la contre-surface d'étanchéité (9) sont revêtues d'une couche métallique (10) formant garniture souple d'étanchéité.

8. Soupape à clapet (1) selon l'une des revendications 1 à 7,
**caractérisée en ce que**
une seconde lèvre d'étanchéité métallique (7b) est associée à la lèvre d'étanchéité métallique (7a), ladite seconde lèvre d'étanchéité métallique présentant un écart par rapport à la première lèvre d'étanchéité métallique (7a) dans la direction d'écoulement de la soupape à clapet (1), **en ce que** les deux lèvres d'étanchéité métalliques (7a, 7b) renferment conjointement, dans la position de blocage de la soupape à clapet (1), lors de l'application sur la contre-surface d'étanchéité (9), une cavité annulaire (8), et **en ce que** les surfaces de section transversale des deux lèvres d'étanchéité métalliques (7a, 7b) sont inclinées et/ou s'étendent recourbées en direction de l'intérieur de ladite cavité annulaire (8).
